# EUROPÄISCHE PATENTSCHRIFT

(11) **EP 3 557 463 B1**
(45) Veröffentlichungstag und Bekanntmachung des Hinweises auf die Patenterteilung: **21.10.2020**
(21) Anmeldenummer: 18167486.2
(22) Anmeldetag: 16.04.2018
(51) Int. Cl.: G06F 21/50

(54) **VERFAHREN UND AUSFÜHRUNGSUMGEBUNG ZUM AUSFÜHREN VON PROGRAMMCODE AUF EINEM STEUERGERÄT**
METHOD AND EXECUTION ENVIRONMENT FOR EXECUTING PROGRAM CODE ON A CONTROL DEVICE
PROCÉDÉ ET ENVIRONNEMENT D'EXÉCUTION PERMETTANT D'EXÉCUTER UN CODE DE PROGRAMME SUR UN DISPOSITIF DE COMMANDE

(43) Veröffentlichungstag der Anmeldung: 23.10.2019
(73) Patentinhaber: Siemens Aktiengesellschaft, 80333 München (DE)
(72) Erfinder: Falk, Rainer, 85586 Poing (DE); Feist, Christian Peter, 80689 München (DE)

(56) Entgegenhaltungen:
- DE-A1-102011 088 236
- DE-A1-102014 109 795
- US-A1- 2013 326 216

## Beschreibung

Die Erfindung bezieht sich auf ein Verfahren und eine Ausführungsumgebung zum Ausführen von Programmcode auf einem Feldgerät.
Der Schutz von Geräten vor Manipulation ist, insbesondere bei industriellen und bei Safety-relevanten Steuergeräten (z. B. Feldgeräte) oder bei industriellen Datenaustauschgateways oder bei einem IoT-Edge-Connector-Gerät (IoT: Internet der Dinge), ein hohes Schutzziel. Speziell Linux-basierte Geräte kommen hierbei regelmäßig zum Einsatz. Weiterhin werden solche Steuergeräte immer häufiger vernetzt und bieten somit eine größere Angriffsfläche für das Einschleusen von schadhafter Software oder für die Manipulation von bestehender Software.

Insbesondere Steuergeräte, welche eine Funktion für nachladbaren Programmcode, z. B. Applikationen (Apps), unterstützen, sind einem erhöhten Risiko ausgesetzt. Zum einen können der nachgeladenen Programmcode Schadcode oder sicherheitskritische Fehler enthalten.
Weiterhin kann auch die Ausführungsumgebung, z. B. die Laufzeitumgebung, für den Programmcode als Ziel für einen Angriff verwendet werden, um den Programmcode selbst zu kompromittieren.
Container-Technologien (z. B. Docker, runC, CoreOS rkt oder LXC) werden häufig im Zusammenhang mit dynamisch nachladbaren Applikationen in Linux-basierten Systemen verwendet. Die Laufzeitumgebung für Container-Applikationen (Container-Apps) wird dabei durch die Virtualisierung von globalen Ressourcen (z.B. Basis-Filesystem, Netzwerkinterfaces des Gerätes) erzeugt.

Aktuell gibt es keine effiziente und vielseitige Methode, um schadhafte Änderungen am Programmcode zu erkennen und um darauf zu reagieren, besonders solche, die während der Laufzeit eines Feldgerätes oder Steuergerätes auftreten. Diese können beispielsweise eine Anbindung an ein IoT-Backend realisieren. Auch ein IoT-Gateway oder allgemein ein Datenaustauschgateway zum Austausch von Industriedaten kann beispielsweise ein Steuergerät im Sinne der vorliegenden Erfindung.

Aus dem Stand der Technik sind das Dokument US 8,531,247 B2, das Dokument US 8,892,616 B2, das Dokument US 8,300,811 B2, das Dokument US 9,147,088 B2, das Dokument US 9584311 B2, das Dokument EP 2976707 B1, das Dokument EP 2 605 445 B1, das Dokument EP 2 870 565 A1, das Dokument EP 2 891 102 A1, das Dokument WO 2017137256 A1, das Dokument EP 2870565 B1, das Dokument EP 3028140 B1, das Dokument EP 17175275 und das Dokument US 8 843 761 B2 bekannt. Außerdem kennt man das Dokument US 2013/326216 A1.

Eine Aufgabe der vorliegenden Erfindung ist es, ein Verfahren und eine Ausführungsumgebung bereitzustellen, die Programmcode sicher auf Feldgeräten bzw. Steuergeräten ausführt.

Die Aufgabe wird durch die in den unabhängigen Ansprüchen angegebenen Merkmale gelöst. In den abhängigen Ansprüchen sind vorteilhafte Weiterbildungen der Erfindung dargestellt.

Ein erster Aspekt der Erfindung betrifft eine Ausführungsumgebung zum Ausführen von Programmcode auf einem Steuergerät aufweisend:
- einen Funktionsspeicher, der zum Speichern von Überprüfungsfunktionen eingerichtet ist;
- einen Konfigurationsspeicher, der zum Speichern von Ausführungsanforderungen für Überprüfungsbereiche eingerichtet ist,
   wobei der Konfigurationsspeicher mittels eines Manipulationserkennungsmoduls geschützt ist, und
   wobei die Ausführungsanforderungen in einem Konfigurationsmodus der Ausführungsumgebung konfiguriert werden können;
- eine Ausführungseinheit,
- wobei die Überprüfungsbereiche zumindest einer von
   - dem Programmcode,
   - zumindest einem ersten Teil der Programmbefehle des Programmcodes
   - der Ausführungsumgebung und/oder
   - der Ausführungseinheit sind;
- wobei den Überprüfungsbereichen mittels der Ausführungsanforderungen die Überprüfungsfunktionen zugeordnet sind,
- wobei die Ausführungseinheit eingerichtet ist, mittels der Überprüfungsfunktionen ein Prüfergebnis zu ermitteln, das angibt ob der jeweilige Überprüfungsbereich die Ausführungsanforderungen erfüllt,
- wobei die Ausführungseinheit eingerichtet ist, den jeweiligen Programmbefehl und/oder Programmcode abhängig vom Prüfergebnis auszuführen.

Sofern es in der nachfolgenden Beschreibung nicht anders angegeben ist, beziehen sich die Begriffe "durchführen", "berechnen", "rechnergestützt", "rechnen", "feststellen", "generieren", "konfigurieren", "rekonstruieren" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Insbesondere sollte der Ausdruck "Computer" möglichst breit ausgelegt werden, um insbesondere alle elektronischen Geräte mit Datenverarbeitungseigenschaften abzudecken. Computer können somit beispielsweise Personal Computer, Server, speicherprogrammierbare Steuerungen (SPS), Handheld-Computer-Systeme, Pocket-PC-Geräte, Mobilfunkgeräte und andere Kommunikationsgeräte, die rechnergestützt Daten verarbeiten können, Prozessoren und andere elektronische Geräte zur Datenverarbeitung sein.

Unter "rechnergestützt" kann im Zusammenhang mit der Erfindung beispielsweise eine Implementierung des Verfahrens verstanden werden, bei dem insbesondere ein Prozessor mindestens einen Verfahrensschritt des Verfahrens ausführt.

Unter einem "Prozessor" kann im Zusammenhang mit der Erfindung beispielsweise eine Maschine oder eine elektronische Schaltung verstanden werden. Bei einem Prozessor kann es sich insbesondere um einen Hauptprozessor (engl. Central Processing Unit, CPU), einen Mikroprozessor oder einen Mikrocontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln. Bei einem Prozessor kann es sich beispielsweise auch um einen IC (integrierter Schaltkreis, engl. Integrated Circuit), insbesondere einen FPGA (engl. Field Programmable Gate Array) oder einen ASIC (anwendungsspezifische integrierte Schaltung, engl. Application-Specific Integrated Circuit), oder z. B. ein Multi-Chip-Modul, z. B. ein 2,5D oder 3D Multi-Chip-Modul, bei dem insbesondere mehrere sogenannte Dies direkt oder über einen Interposer miteinander verbunden sind oder einen DSP (Digitaler Signalprozessor, engl. Digital Signal Processor) oder einen Grafikprozessor GPU (Graphic Processing Unit) handeln. Auch kann unter einem Prozessor ein virtualisierter Prozessor, eine virtuelle Maschine oder eine Soft-CPU verstanden werden. Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens, der Komponente, der Module, oder anderer Aspekte und/oder Teilaspekte der Erfindung realisiert.

Unter einer "Speichereinheit" oder "Speichermodul" und dergleichen kann im Zusammenhang mit der Erfindung beispielsweise ein flüchtiger Speicher in Form von Arbeitsspeicher (engl. Random-Access Memory, RAM) oder ein dauerhafter Speicher wie eine Festplatte oder ein Datenträger oder z. B. ein wechselbares Speichermodul verstanden werden.

Unter einem "Modul" kann im Zusammenhang mit der Erfindung beispielsweise ein Prozessor und/oder eine Speichereinheit zum Speichern von Programmbefehlen verstanden werden. Beispielsweise ist der Prozessor speziell dazu eingerichtet, die Programmbefehle derart auszuführen, damit der Prozessor Funktionen ausführt, um das erfindungsgemäße Verfahren oder einen Schritt des erfindungsgemäßen Verfahrens zu implementieren oder realisieren.

Unter einer "Prüfsumme" kann im Zusammenhang mit der Erfindung beispielsweise eine kryptographische Prüfsumme oder kryptographischer Hash bzw. Hashwert verstanden werden, die insbesondere mittels einer kryptographischen Hashfunktion gebildet oder berechnet werden. Weiterhin kann darunter insbesondere auch eine digitale Signatur oder ein kryptographischer Nachrichtenauthentisierungscode verstanden werden.

Unter "extern" kann im Zusammenhang mit der Erfindung beispielsweise verstanden werden, dass z. B. eine Komponente (z. B. Modul oder Einheit) kein integraler Bestandteil einer anderen entsprechenden Komponente ist. Ist etwas beispielsweise extern von einem Prozessor so ist diese entsprechende Komponente kein integraler Bestandteil des Prozessors.

Unter "Ausführungsanforderungen" können im Zusammenhang mit der Erfindung beispielsweise Sicherheitsanforderungen an die Ausführungsumgebung oder den Programmcode bzw. an die Programmbefehle des Programmcodes verstanden werden.

Unter "Ausführungsumgebung" kann im Zusammenhang mit der Erfindung beispielsweise ein Gerät oder eine Vorrichtung sein, die derart eingerichtet sind, einen Programmcode auszuführen. Hierzu kann das Gerät oder die Vorrichtung beispielsweise einen Prozessor aufweisen, der den Programmcode ausführt. Die Ausführungseinheit kann beispielsweise selbst in Software oder in Hardware realisiert sein. Die Ausführungseinheit ermöglicht beispielsweise die Ausführung von Programmcode.

Das Gerät kann beispielsweise einen Aktor umfassen, der z. B. über den Programmcode gesteuert wird. Eine Ausführungsumgebung kann beispielsweise auch ein Betriebssystem sein oder ein Betriebssystem umfassen. Eine Ausführungsumgebung kann beispielsweise eine Laufzeitumgebung (z. B. eine Java virtual Machine mit Klassenbibliotheken oder eine modifizierte Variante davon) sein oder eine Laufzeitumgebung (z. B. eine Java virtual Machine mit Klassenbibliotheken oder eine modifizierte Variante davon) umfassen. Weiterhin kann es sich beispielsweise bei einer Laufzeitumgebung um die Gesamtheit der von Benutzerapplikationen verwendeten Ressourcen (z. B. andere ausführbare Programmdateien im Dateisystem, vorhandene Netzwerkinterfaces, Interprozesskommunikationsmechanismen) handeln. Eine Ausführungsumgebung kann beispielsweise eine Container-Ausführungsumgebung, z.B. Docker oder runC oder eine modifizierte Variante davon sein oder umfassen.

Unter "Programmcode" kann im Zusammenhang mit der Erfindung beispielsweise eine Applikation und/oder ein Programm und/oder Programmbefehle und/oder eine App und/oder ein Container-Image und/oder eine Container-App verstanden werden. Linux Container, z.B. Docker oder runC, ermöglichen beispielsweise die Ausführung eines Container-Abbilds (Container-Image) und der darin enthaltenen Software in einer isolierten Ausführungsumgebung. Container können beispielsweise verwendet werden, um flexibel unterschiedliche Funktionalität auf einem Steuergerät bzw. Feldgerät auszuführen. Ein Container bzw. das Container-Image wird beispielsweise daher auch als Container-App bezeichnet, da sich auf Basis von Containern eine App-Funktionalität realisieren lässt. Apps lassen sich beispielsweise aber auch z.B. mit einer Java Virtual Machine realisieren.

Unter einem "Steuergerät" kann im Zusammenhang mit der Erfindung beispielsweise ein Feldgerät, eine Fertigungsmaschine oder ein Steuergerät für ein Energieversorgungsnetz gemeint sein.

Die Erfindung ist insbesondere dahingehend vorteilhaft, um z. B. eine Konfigurierbarkeit und Realisierung einer Methode für die Verifizierung der Laufzeitumgebung von Programmcode zu realisieren, bevor in dieser der Programmcode bzw. Programmbefehle des Programmcodes ausgeführt werden. Die Erfindung kann beispielsweise in den Kernel eines Betriebssystems integriert werden, so dass die Erfindung insbesondere ein integrales Element des Betriebssystem-Kernels bildet. Zusätzlich ist die Erfindung beispielsweise dahingehend vorteilhaft, um aktiv in die Einrichtung einer Ausführungsumgebung für Programmcode einzugreifen.

Vorteilhaft ist beispielsweise darüber hinaus, dass Programmcode mit einer erhöhten Sicherheit ausgeführt werden können, da z. B. das Starten eines Programmcodes mit einer manipulierten (zur Laufzeit oder Offline) Ausführungsumgebung stark erschwert wird. Dies wird z. B. dadurch erreicht, dass die Überprüfung im Gegensatz zu bekannten Methoden vor jedem Starten eines entsprechenden Programmcodes oder Programmbefehlen durchgeführt wird.

Zudem kann die Erfindung beispielsweise in den Betriebssystem-Kernel integriert werden und somit vor kompromittierten, privilegierten Prozessen besser geschützt werden. Zudem kann die Erfindung beispielsweise auch verwendet werden um schon laufenden Programmcode über Veränderungen mittels Steuerfunktionen zu benachrichtigen oder anderweitig zu reagieren.

Bei einer weiteren Ausführungsform der Ausführungsumgebung legen die Ausführungsanforderungen Ressourcen oder vorgegebene Programmbefehle fest, deren Ausführung oder deren Verwendung unzulässig sind.

Die Ausführungsumgebung ist dahingehend vorteilhaft, um insbesondere kritische Befehle oder Zugriffe auf Ressourcen zu unterbinden, deren Zugriff ein hohes Sicherheitsrisiko birgt. Beispielsweise kann ein Zugriff auf Programmdaten der Ausführungsumgebung gesperrt werden oder Programmbefehle gesperrt werden, die einen Prozess auf einer unerlaubten Berechtigungsstufe ausführen (z. B. mit Root-Rechten).

Bei einer weiteren Ausführungsform der Ausführungsumgebung legen die Ausführungsanforderungen Ressourcen oder vorgegebene Programmbefehle fest deren Ausführung oder deren Verwendung zulässig sind.

Die Ausführungsumgebung ist dahingehend vorteilhaft, um insbesondere nur die Ressourcen oder Programmbefehle zuzulassen, die für den Betrieb des Steuergerätes tatsächlich notwendig sind. Die Ausführungsumgebung ist beispielsweise weiterhin dahingehend vorteilhaft, um insbesondere nur die Ressourcen oder Programmbefehle zuzulassen, die für die Ausführung einer App auf einem Steuergerätes tatsächlich notwendig sind.

Bei einer weiteren Ausführungsform der Ausführungsumgebung legen die Ausführungsanforderungen für Ressourcen Zustände für die Ausführung des Programmcodes oder der jeweiligen Programmbefehle fest.

Die Ausführungsumgebung ist dahingehend vorteilhaft, um beispielsweise für die Ausführungsumgebung und/oder die Ausführungseinheit einen vorgegebenen Zustand zu fordern, der für eine sichere Ausführung des Programmcodes erforderlich ist. Als Zustand kann beispielsweise eine bestimmte Version der Ausführungseinheit (z. B. der Laufzeitumgebung) bzw. derer Programmbibliotheken gefordert sein. Es kann beispielsweise auch gefordert sein, dass bestimmte Ressourcen (Passwörter, kryptographische Schlüssel, Algorithmen mit firmenspezifischem Know-How) verschlüsselt sind oder vor und nach deren Nutzung verschlüsselt werden. Die Ausführungsumgebung bzw. die Ausführungseinheit überprüfen beispielsweise, ob die Anforderungen an die Zustände erfüllt sind. Abhängig von dem Prüfergebnis werden z. B. der Programmcode bzw. die jeweiligen Programbefehle ausgeführt (wenn die Anforderungen erfüllt sind) oder die Ausführung wird unterbunden (wenn die Anforderungen nicht erfüllt sind). Unter einem Zustand kann beispielsweise auch ein Zustand des Steuergerätes und eines seiner Komponenten verstanden werden. Beispielsweise kann gefordert werden, dass ein Aktor sich in einer bestimmten Ausgangsposition befindet, bevor die Programmbefehle ausgeführt werden. Wird beispielsweise festgestellt, dass der gewünschte Zustand nicht gegeben ist, kann die Ausführungseinheit oder Ausführungsumgebung mittels Steuerbefehlen den gewünschten Zustand herstellen. Ist dies beispielsweise nicht möglich, kann eine Ausführung des Programmcodes oder der entsprechenden Programbefehle z. B. unterbunden werden.

Bei einer weiteren Ausführungsform der Ausführungsumgebung geben die Ausführungsanforderungen eine Prüfsumme für den Programmcode und/oder die Programmbefehle und/oder die Ausführungsumgebung und/oder die Ausführungseinheit vor.

Die Ausführungsumgebung ist dahingehend vorteilhaft, um insbesondere den Programmcode dahingehend zu überprüfen, ob dieser verändert wurde. Hierzu bildet dann die Ausführungseinheit bzw. die Ausführungsumgebung z. B. eine weitere Prüfsumme über den Programmcode bzw. die entsprechenden Programmbefehle und vergleicht diese weitere Prüfsumme mit der Prüfsumme die durch die Ausführungsanforderungen vorgegeben ist. Die Ausführungsumgebung bzw. die Ausführungseinheit vergleicht beispielsweise, ob die beiden Prüfsummen übereinstimmen. Abhängig von dem Vergleichsergebnis werden z. B. der Programmcode bzw. die jeweiligen Programmbefehle ausgeführt (wenn die Prüfsummen identisch sind) oder die Ausführung wird unterbunden (wenn die Prüfsummen abweichen).

Bei einer weiteren Ausführungsform der Ausführungsumgebung wird das Prüfergebnis zumindest zum Teil anhand der zugeordneten Überprüfungsfunktionen ermittelt.

Die Ausführungsumgebung ist dahingehend vorteilhaft, um insbesondere spezifische Überprüfungsfunktionen mit den entsprechenden zu überprüfenden Ausführungsanforderungen zu nutzen. Beispielsweise kann so eine Funktion ausgeführt werden, die eine Prüfsumme für den Programmcode umfasst oder einen Funktionstest des Steuergerätes ausführt, um festzustellen, ob das Gerät ordnungsgemäß funktioniert.

Bei einer weiteren Ausführungsform der Ausführungsumgebung ist der Konfigurationsspeicher mittels eines Manipulationserkennungsmoduls geschützt.

Die Ausführungsumgebung ist dahingehend vorteilhaft, um kritische Daten im Konfigurationsspeicher vor einer Manipulation zu schützen. Das Manipulationserkennungsmodul kann dabei beispielsweise auf unterschiedliche Weise realisiert sein. Beispielsweise kann es sich hierbei um mechanische und/oder elektrische Sicherheitseinheiten handeln. Dies ist z. B. eine Bohrschutzfolie, die bei einer Beschädigung die sensiblen Daten des entsprechenden Konfigurationsspeichers löscht. Alternativ oder zusätzlich kann es sich beispielsweise auch um ein schwer zu öffnendes Gehäuse des Speichers handeln, da beispielsweise das Gehäuse aus Stahl gefertigt ist und zugeschweißt ist. Alternativ oder zusätzlich kann es sich beispielsweise auch um eine elektromagnetische Abschirmung handeln um Seitenkanalangriffe auf den Konfigurationsspeicher zu unterbinden. Der Konfigurationsspeicher kann insbesondere in einer Variante Tampersensoren, z. B. Gehäuseschalter, Schwingungssensoren, Temperatursensoren, Lichtsensoren, Strahlungssensoren oder ein extern bereitgestelltes Tamperalarmsignal auswerten. Es ist beispielsweise auch möglich, dass die Ausführungsumgebung oder das Steuergerät auf die gleiche Weise mit einem analog ausgebildeten Manipulationserkennungsmodul gesichert bzw. dieses umfasst.

Bei einer weiteren Ausführungsform der Ausführungsumgebung können die Ausführungsanforderungen in einem Konfigurationsmodus der Ausführungsumgebung konfiguriert werden.

Die Ausführungsumgebung ist dahingehend vorteilhaft, um insbesondere nur bzw. exklusiv in diesem Konfigurationsmodus die Ausführungsanforderungen konfigurieren zu können. Der Konfigurationsmodus kann beispielsweise durch eine Eingabe eines Passwortes an der Ausführungsumgebung bzw. an dem Steuergerät eingeschaltet werden. Alternativ oder zusätzlich kann eine kryptographische Sicherung vorgesehen sein, bei der z. B. ein Anwender zum Konfigurieren sich z. B. mittels eines Sicherheitstoken (z. B. Smart-Card, USB-Token) authentisieren muss.

Bei einer weiteren Ausführungsform der Ausführungsumgebung überprüfen die Überprüfungsfunktionen die Ausführungsumgebung anhand der Ausführungsanforderungen und das Prüfergebnis wird zumindest zum Teil anhand des Überprüfens der Ausführungsumgebung ermittelt.

Die Ausführungsumgebung ist dahingehend vorteilhaft, um beispielsweise mehrere unterschiedliche Prüfungen und Anforderungen parallel durchzuführen. Die Ergebnisse der Einzelprüfungen gehen dann beispielsweise in das Prüfergebnis ein. Der Programmcode und/oder die Programmbefehle werden z. B. nur dann ausgeführt, wenn zumindest eine vorgegebene Anzahl von Einzelprüfungen erfolgreich war und/oder eine vorgegebene Anzahl von Einzelprüfungen mit einem vorgegenen Sicherheitsniveau erfolgreich durchgeführt wurde. Alternativ oder zusätzlich kann z. B. auch gefordert werden, dass vorgegebene kritische Einzelprüfungen erfolgreich sind und nur ein Teil von vorgegebenen weniger kritischen Einzelprüfungen erfolgreich geprüft werden müssen.

Bei einer weiteren Ausführungsform der Ausführungsumgebung wird eine Steuerfunktion ausgeführt, wenn eine Prüfung der Ausführungsanforderungen für den Programmcode oder einen der jeweiligen Programmbefehle fehlschlägt. Dabei legen beispielsweise die Ausführungsanforderungen die jeweilige Steuerfunktion fest, wobei die Steuerfunktionen beispielsweise im Funktionsspeicher gespeichert sind.

Die Ausführungsumgebung ist dahingehend vorteilhaft, um beispielsweise zu konfigurieren, wie die Ausführungsumgebung sich verhalten soll, wenn die Ausführungsanforderungen nicht erfüllt sind. Wurde beispielsweise festgestellt, dass der Programmcode manipuliert wurde (z. B. eine Prüfsummenüberprüfung ist fehlgeschlagen), kann so das Steuergerät z. B. in einen sicheren Zustand versetzt werden, der keine weitere Ausführung von Programmcode zulässt, der insbesondere den Zugriff auf festgelegte Ressourcen (z. B. externe Interfaces) einschränkt und/oder es wird ein zuständiger Wartungstechniker über ein Steuersignal oder Alarmsignal benachrichtigt.

Gemäß einem weiteren Aspekt betrifft die Erfindung ein Verfahren zum rechnergestützten Ausführen eines Programmcodes auf einem Steuergerät mit folgenden Verfahrensschritten:
- Speichern von Überprüfungsfunktionen;
- Speichern von Ausführungsanforderungen für Überprüfungsbereiche, wobei
   - die Überprüfungsbereiche
      - der Programmcode und/oder
      - zumindest ein erster Teil der Programmbefehle des Programmcodes und/oder
      - eine Ausführungsumgebung und/oder
      - eine Ausführungseinheit sind;
   - den Überprüfungsbereichen mittels der Ausführungsanforderungen die Überprüfungsfunktionen zugeordnet werden;
- Ermitteln eines Prüfergebnisses mittels der Überprüfungsfunktionen, das angibt ob die Überprüfungsbereiche die Ausführungsanforderungen erfüllen,
- Ausführen des jeweiligen Programmbefehls und/oder des Programmcodes abhängig vom Prüfergebnis.

Bei einer weiteren Ausführungsform oder mehreren weiteren Ausführungsformen des Verfahrens umfasst das Verfahren zumindest ein weiteres Merkmal oder mehrere weitere Merkmale, um Ausführungsformen (z. B. funktionale Merkmale) der Ausführungsumgebung analog nachzubilden.

Des Weiteren wird ein Computerprogrammprodukt mit Programmbefehlen zur Durchführung der genannten erfindungsgemäßen Verfahren beansprucht, wobei mittels des Computerprogrammprodukts jeweils eines der erfindungsgemäßen Verfahren, alle erfindungsgemäßen Verfahren oder eine Kombination der erfindungsgemäßen Verfahren durchführbar ist.

Zusätzlich wird eine Variante des Computerprogrammproduktes mit Programmbefehlen zur Konfiguration eines Erstellungsgeräts, beispielsweise ein 3D-Drucker, ein Computersystem oder ein zur Erstellung von Prozessoren und/oder Geräten geeignete Herstellungsmaschine, beansprucht, wobei das Erstellungsgerät mit den Programmbefehlen derart konfiguriert wird, dass die erfindungsgemäße Ausführungsumgebung erstellt wird.

Darüber hinaus wird eine Bereitstellungsvorrichtung zum Speichern und/oder Bereitstellen des Computerprogrammprodukts beansprucht. Die Bereitstellungsvorrichtung ist beispielsweise ein Datenträger, der das Computerprogrammprodukt speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes Computersystem, ein cloudbasiertes Rechnersystem und/oder virtuelles Rechnersystem, welches das Computerprogrammprodukt vorzugsweise in Form eines Datenstroms speichert und/oder bereitstellt.

Diese Bereitstellung erfolgt beispielsweise als Download in Form eines Programmdatenblocks und/oder Befehlsdatenblocks, vorzugsweise als Datei, insbesondere als Downloaddatei, oder als Datenstrom, insbesondere als Downloaddatenstrom, des vollständigen Computerprogrammprodukts. Diese Bereitstellung kann beispielsweise aber auch als partieller Download erfolgen, der aus mehreren Teilen besteht und insbesondere über ein Peer-to-Peer Netzwerk heruntergeladen oder als Datenstrom bereitgestellt wird. Ein solches Computerprogrammprodukt wird beispielsweise unter Verwendung der Bereitstellungsvorrichtung in Form des Datenträgers in ein System eingelesen und führt die Programmbefehle aus, sodass das erfindungsgemäße Verfahren auf einem Computer zur Ausführung gebracht wird oder das Erstellungsgerät derart konfiguriert, dass es die erfindungsgemäße Ausführungsumgebung erstellt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Dabei zeigen in schematischer Darstellung:
- Fig. 1: ein erstes Ausführungsbeispiel der Erfindung;
- Fig. 2: ein zweites Ausführungsbeispiel der Erfindung;
- Fig. 3: ein drittes Ausführungsbeispiel der Erfindung;

In den Figuren sind funktionsgleiche Elemente mit denselben Bezugszeichen versehen, sofern nichts anderes angegeben ist.

Die nachfolgenden Ausführungsbeispiele weisen, sofern nicht anders angegeben oder bereits angegeben, zumindest einen Prozessor und/oder eine Speichereinheit auf, um das Verfahren zu implementieren oder auszuführen.

Auch sind insbesondere einem (einschlägigen) Fachmann in Kenntnis des/der Verfahrensanspruchs/Verfahrensansprüche alle im Stand der Technik üblichen Möglichkeiten zur Realisierung von Produkten oder Möglichkeiten zur Implementierung selbstverständlich bekannt, sodass es insbesondere einer eigenständigen Offenbarung in der Beschreibung nicht bedarf. Insbesondere können diese gebräuchlichen und dem Fachmann bekannten Realisierungsvarianten ausschließlich per Hardware(komponenten) oder ausschließlich per Software(komponenten) realisiert werden. Alternativ und/oder zusätzlich kann der Fachmann im Rahmen seines fachmännischen Könnens weitestgehend beliebige erfindungsgemäße Kombinationen aus Hardware(komponenten) und Software(komponenten) wählen, um erfindungsgemäße Realisierungsvarianten umzusetzen. Eine erfindungsgemäße Kombination aus Hardware(komponenten) und Software(komponenten) kann insbesondere dann eintreten, wenn ein Teil der erfindungsgemäßen Wirkungen vorzugsweise ausschließlich durch Spezialhardware (z. B. einem Prozessor in Form eines ASIC oder FPGA) und/oder ein anderer Teil durch die (prozessor- und/oder speichergestützte) Software bewirkt wird.

Insbesondere ist es angesichts der hohen Anzahl an unterschiedlichen Realisierungsmöglichkeiten unmöglich und auch für das Verständnis der Erfindung nicht zielführend oder notwendig, all diese Realisierungsmöglichkeiten zu benennen. Insofern sollen insbesondere all die nachfolgenden Ausführungsbeispiele lediglich beispielhaft einige Wege aufzeigen, wie insbesondere solche Realisierungen der erfindungsgemäßen Lehre aussehen könnten.

Folglich sind insbesondere die Merkmale der einzelnen Ausführungsbeispiele nicht auf das jeweilige Ausführungsbeispiel beschränkt, sondern beziehen sich insbesondere auf die Erfindung im Allgemeinen. Entsprechend können vorzugsweise Merkmale eines Ausführungsbeispiels auch als Merkmale für ein anderes Ausführungsbeispiel dienen, insbesondere ohne dass dies expliziet in dem jeweiligen Ausführungsbeispiel genannt sein muss.

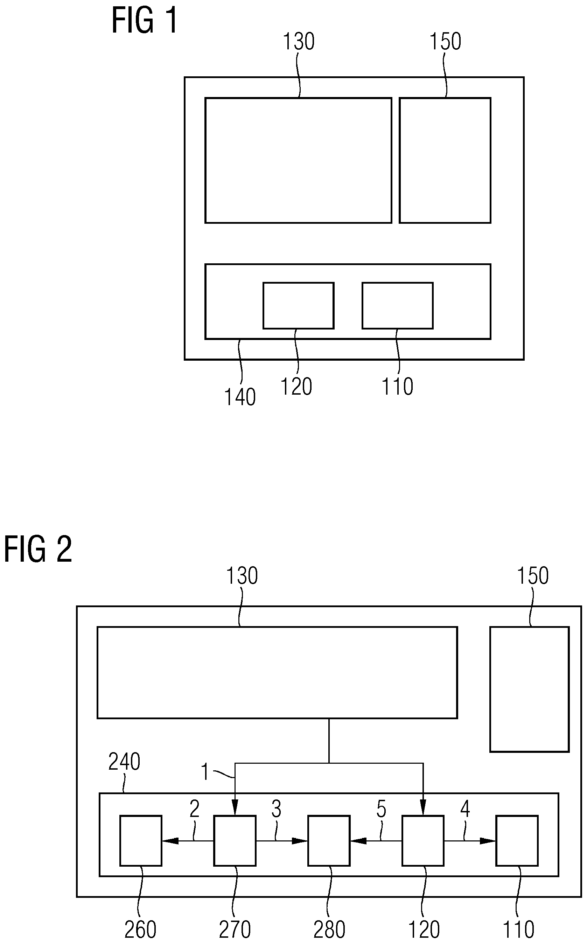

Die Fig. 1 zeigt ein erstes Ausführungsbeispiel der Erfindung. Im Einzelnen ist dabei eine Ausführungsumgebung zum Ausführen von Programmcode auf einem Steuergerät gezeigt. Ein Steuergerät kann beispielsweise ein Feldgerät sein, eine speicherprogrammierbare Steuerung, eine Steuereinheit, eine Überwachungseinheit, ein Schutzschalter, eine Safety-Überwachung, ein industrielles Datenaustauschgateway oder ein IoT-Gateway. Ein Steuergerät wird in einem Automatisierungssystem zur Überwachung und/oder Steuerung eines technischen Prozesses verwendet, z.B. einer Werkzeugmaschine, einer Produktionsanlage, einer verfahrenstechnischen Anlage, eines Energieverteilnetzes, eines Energietransportnetzes, eines Kraftwerks, eines Bahnleitsystems, eines Zugsicherungssystem, einer Gebäudeautomatisierung, eines Medizingeräts, eines autonomen Fahrzeugs oder ähnlich verwendet.

Die Ausführungsumgebung umfasst einen Funktionsspeicher 120, einen Konfigurationsspeicher 110 und eine Ausführungseinheit 140. Zudem kann die Ausführungsumgebung ein Speichermodul 150 umfassen und einen Programmspeicher 130 umfassen. Der Programmspeicher 130 kann derart ausgebildet sein den Programmcode oder mehrere Programmcodes in Form von Container Applikationen zu speichern. Der Programmspeicher 130 kann zudem noch ein Programmcode-Management-Modul umfassen. Darüber hinaus kann die Ausführungseinheit 140 beispielsweise als Kernel eines Betriebssystems ausgebildet sein oder ein Teil eines solchen Kernels sein. Entsprechend kann die Ausführungseinheit 140 weitere Kernelressourcen und/oder Steuergeräteressourcen umfassen oder eine Schnittstelle oder ein Management-Modul, das einen Zugriff auf diese erlauben kann. Der Programmspeicher 130 kann z. B. als Flash-Speicher ausgebildet sein. Der Programmcode kann direkt im Programmspeicher ausgeführt werden, oder der im Programmspeicher gespeicherte Programmcode kann zur Ausführung in einen Arbeitsspeicher kopiert werden und dort ausgeführt werden.

Der Funktionsspeicher 120 ist zum Speichern von einer oder mehreren Überprüfungsfunktionen eingerichtet.

Der Konfigurationsspeicher 110 ist zum Speichern von Ausführungsanforderungen für Überprüfungsbereiche eingerichtet.
Die Überprüfungsbereiche sind dabei:
- der Programmcode und/oder
- zumindest ein erster Teil der Programmbefehle des Programmcodes und/oder
- die Ausführungsumgebung und/oder
- die Ausführungseinheit;

Ein Teil der Programmbefehle bedeutet dabei insbesondere, dass bestimmten Programmbefehlen (z. B. Zugriff auf das Dateisystem oder Ressourcen des Gerätes) entsprechende Ausführungsanforderungen zugeordnet sind.

Insbesondere werden den Überprüfungsbereichen der Ausführungsumgebung oder des Programmcodes die jeweiligen Ausführungsanforderungen zugeordnet.

Insbesondere werden den Überprüfungsbereichen mittels der Ausführungsanforderungen die Überprüfungsfunktionen zugeordnet.

Die Ausführungseinheit 140 ist dazu eingerichtet mittels der Überprüfungsfunktion ein Prüfergebnis zu ermitteln, das angibt, ob ein jeweiliger Überprüfungsbereich die Ausführungsanforderungen erfüllt.

Die Ausführungseinheit 140 ist zudem dazu eingerichtet, den jeweiligen Programmbefehl und/oder Programmcode abhängig vom Prüfergebnis auszuführen.

Die Erfindung ist dazu geeignet, eine Integrität einer Ausführungsumgebung für Container-Applikationen zu schützen. Die Ausführungsumgebung kann dabei z. B. als Laufzeitumgebung für Container implementiert sein. Dies ist dahingehend vorteilhaft, wenn ein Programmcode (z. B. eine Container-Applikation oder nur kurz Container) auf einem industriellen Feldgerät verwendet wird, um insbesondere das Nachladen und Aktualisieren von einzelnen Gerätefunktionen zu unterstützen. Dies kann beispielsweise auch als App-Technologie bezeichnet werden.

In industriellen Umgebungen besteht ein besonders hoher Bedarf, die Geräteintegrität, z. B. eines Steuergerätes, zu schützen. Unter einem Steuergerät kann hierbei insbesondere ein Feldgerät oder andere Geräte im industriellen Umfeld verstanden werden. Bei diesen Geräten besteht das Problem, dass häufig Patches nicht zeitnah eingespielt werden. Außerdem werden Apps (auch als Container oder Programmcode) im Allgemeinen nur selten geladen oder aktualisiert, z. B. nur bei der Erstinbetriebnahme oder in einem definierten Wartungsfenster. Daher sind die aus dynamischen, agilen Cloud-Umgebungen bekannten Lösungen zum Schutz von Container-Umgebungen für diese Umgebung nicht anwendbar.

Mit der Erfindung kann die Integrität der Ausführungsumgebung für den Prorammcode vor dem Starten des Programmcodes auf dem Gerät (das den Programmcode ausführen soll) geprüft werden. Die erfindungsgemäße Ausführungsumgebung kann dabei auch als Container Runtime Verification Mechanism - CRVM genannt werden.

Die Prüfung kann beispielsweise bei jedem Starten eines Programmcodes (z. B. einer Container-App) erfolgen, nur beim Starten von vorgegebenen Programmcodes (z. B. vorgegebene Container-Apps), nur beim ersten Starten eines Programmcodes, oder beim erstmaligen Starten einer Container-App nach einem Geräteneustart. Weiterhin kann die Prüfung wiederholt zu vorgegebenen Zeitpunkten oder innerhalb vorgegebener Intervalle erfolgen, z. B. einmal täglich. Dies ist insbesondere bei Container-Apps vorteilhaft, die dauerhaft oder langandauernd laufen.

In einer Variante wird dazu die Container-App gegenüber einer Container-Zulässigkeitspolicy (Whitelist, Blacklist) geprüft. Diese kann eine ganze Container-App betreffen oder einzelne Software-Komponenten einer Container-App. Der Container wird nur gestartet, wenn die Prüfung ergibt, dass die Container-App bzw. deren Komponenten zulässig sind. Diese Prüfung ist vorzugsweise als Betriebssystem-Kernel-Funktion realisiert. Der erfindungsgemäße CRVM umfasst einen Satz an Funktionen (z. B. die Überprüfungsfunktionen), die der Kernel vor sicherheitskritischen Operationen ausführt, die speziell zur Einrichtung und dem Starten von Containern verwendet werden. Durch die Überprüfungsfunktionen wird dann anhand der Ausführungsanforderungen (z. B. eine CRVM-Konfiguration oder eine Policy) durch die Ausführungseinheit geprüft, ob ein entsprechender Teil der Laufzeitumgebung einen zulässigen, gewünschten Zustand besitzt. Beispielsweise kann ein solcher "Hook" vor dem Einrichten des für den Container sichtbaren root-Filesystems verwendet werden, um die Integrität des Filesystems zu verifizieren, z. B. durch Berechnung einer kryptographischen Prüfsumme über die Filesystem-Inhalte und dem anschließenden Abgleich mit einem in der Policy eingetragenen Wert. Hierzu kann zu einem sicheren Zeitpunkt bzw. beim erstellen der Ausführungsanforderungen eine entsprechende Referenzprüfsumme für die Filesystem-Inhalte erzeugt und gespeichert werden. Wird später die Ausführungsanforderung überprüft wird eine erneute Prüfsumme über die Filesystem-Inhalte berechnet und mit der Referenzprüfsumme verglichen. Das Ergebnis dieses Vergleichens wird dann im Prüfergebnis gespeichert.

Fig. 1 zeigt insbesondere eine Ausführungsumgebung, die in einem Steuergerät, z. B. einem Embedded Gerät, installiert ist.

Hier sind die Überprüfungsfunktionen beispielsweise Teil des Kernel-Images. Die Ausführungsanforderungen können in einer Variante während des Bootvorgangs aus dem Filesystem in einen nur dem Kernel zugänglichen Teil des Arbeitsspeichers geladen. In einer anderen Variante ist diese statisch und somit in das Kernel-Image eingebettet. In den Ausführungsanforderungen wird festgelegt, welche Teile der Ausführungsumgebung (Laufzeitumgebung) von den entsprechenden Überprüfungsfunktionen überprüft bzw. verifiziert werden.

Das gezeigte Ausführungsbeispiel kann z. B. in den entsprechenden Ausführungsanforderungen einen Integritätsreferenzwert (z. B. ein Hash-Wert) für den gespeicherten Programmcode (z. B. ein Container Basis-Images) umfassen. Mit anderen Worten findet also ein Whitelisting statt. Der Kernel lädt und startet einen Programmcode (z. B. einen Container) nur dann, wenn der Container einschließlich seiner Ausführungsumgebung gemäß den Ausführungsanforderungen zulässig ist. Dadurch wird gewährleistet, dass nur gemäß den Ausführungsanforderungen zulässige Container-Apps gestartet werden können, und nur in Kombination mit einer zulässigen Ausführungsumgebung. Es wird also die Kombination des durch die Container-App definierten Programmcodes und einem weiteren Programmcode der Ausführungsumgebung auf Zulässigkeit geprüft. Da die Ausführungsanforderungen unabhängig vom Dateisystem und Dateisystemberechtigungen und -attributen verwaltet werden, kann der erfindungsgemäße Schutz nicht durch eine Manipulation des Dateisystems umgangen werden. Selbst wenn also kein integritätsgeschütztes Dateisystem verwendet wird, ist der erfindungsgemäße Schutzmechanismus wirksam. Dies hat den Vorteil, dass die Erfindung mit einem beliebigen Dateisystem verwendet werden kann, z. B. auch mit einem schreibbaren Dateisystem oder einem Wechselmedium (SDCard). Es ist jedoch in einer Variante auch möglich, ein schreibgeschütztes oder integritätsgeschütztes Dateisystem gemeinsam mit der erfindungsgemäßen Lösung zu verwenden.

Mit der Erfindung können beispielsweise der Inhalt von Software- und Konfigurationsdaten, Berechtigungen der Ausführungsumgebung geprüft werden. Weiterhin kann überprüft werden, dass die gemäß der Ausführungsanforderungen (z. B. eine Whitelist-Policy) zulässigen Inhalte vorhanden sind und keine zusätzlichen Dateien.

Startet das Programmcode-Management-Modul einen Programmcode (z. B. einen Container), so wird die Operation zum Einrichten (z. B. "Mounten") des Container-Filesystems durch eine entsprechende Überprüfungsfunktion (z. B. auch als Hook bezeichnet) unterbrochen. Dabei kann das Container-Filesystem z. B. ein bestimmter Speicherbereich des Speichermoduls 150 sein, der dem entsprechenden Programmcode für einen Container zugeordnet ist und/oder diesen umfasst. Das Programmcode-Management-Modul kann dabei z. B. als Container Management Software mit Hilfe von Docker oder runC auf einem Linux-basierten System realisiert werden.

Anschließend wird z. B. eine Prüfsumme (z. B. ein Hashwert) für die entsprechenden Daten des Container-Filesystems berechnet und mit der Referenzprüfsumme in den entsprechenden Ausführungsanforderungen (Whitelist) verglichen. Nur bei einer Übereinstimmung dieser Prüfsummen wird dann beispielsweise die Operation erlaubt und der Startvorgang des Containers fortgeführt.

Die Entscheidung liegt somit im Kernel und ist daher schwieriger zu manipulieren als in gängigen Technologien.

Die Ausführungsanforderungen (z. B. eine Container-App-Zulässigkeits-Policy) ist vorzugsweise nur in einer speziellen Betriebsart (z. B. einem Konfigurationsmodus) des Gerätes (z. B. ein Steuergerät) aktualisierbar. Im regulären operativen Betriebsmodus des (Steuer-)Gerätes ist sie dagegen unveränderbar. Sie kann z. B. in einer Variante nur dann aktualisiert werden, wenn das Gerät sich in einem Wartungsmodus befindet. Hierzu ist es beispielsweise erforderlich, dass sich ein Wartungstechniker, der die Ausführungsanforderungen aktualisiert, sich gegenüber dem Gerät authentisiert (z. B. ein Passwort oder mittels einer Smart-Card und einer Pin).

In einer weiteren Variante werden die Ausführungsanforderungen (z. B. eine Policy) explizit konfiguriert, z. B. durch Laden einer Konfigurationsdatei. Diese kann z. B. von einem Projektierungstool, z.B. dem Siemens TIA-Portal, generiert werden.

In einer anderen Variante werden die Ausführungsanforderungen auf dem Gerät beim Beenden des Wartungsmodus des Gerätes generiert bzw. aktualisiert.

In einer weiteren Variante werden die Ausführungsanforderungen beim Einspielen, Aktualisieren oder Löschen eines Programmcodes (z. B. eine Container-App) auf dem Gerät aktualisiert.

Die Erfindung kann insbesondere in Verbindung mit bestehenden Technologien zur Sicherung der Bootkette (z.B. Secure Boot, Measured Boot) verwendet werden. Somit wären auch die Ausführungsumgebungs-Komponenten des Kernels (z. B. die Überprüfungsfunktionen) in einem vertrauenswürdigen und integeren Zustand.

In einer weiteren Variante können die Überprüfungsfunktionen auch für die Verifizierung des Programmcode-Management-Moduls (z. B. die Container Management Software) und die von ihr benutzen Ressourcen (Libraries, Binaries, Konfigurationsdateien, etc.) verwendet werden, bevor diese ausgeführt wird. So können Container mit einer erhöhten Zuverlässigkeit richtig gestartet werden.

Die Konfiguration der Ausführungsumgebung umfasst dabei vorzugsweise in einer weiteren Variante zwei erfindungsgemäße Komponenten:
1. Konfiguration der Verifikation:
   Die Ausführungsanforderungen können verwendet werden, um anzugeben, welche Teile der Laufzeitumgebung eines zu startenden Containers überprüft werden sollen.
   In einer ersten Variante umfasst dies das Filesystem (dt. "Dateisystem"), auf dessen Basis das root-Filesystem des Containers erzeugt wird. Die Überprüfung kann beispielsweise mittels einer kryptographischen Prüfsumme erfolgen.
   In einer weiteren Variante können auch virtualisierte Kernel-Level Ressourcen, welche Teile der neuen Ausführungsumgebung (z. B. eine Ausführungsumgebung) für den Container werden sollen, hinzugezogen werden.
   Diese werden teilweise in einer Konfigurationsdatei für den jeweiligen Programmcode angegeben. Sollen beispielsweise die Firewall-Einstellungen für die Ausführungsumgebung des Containers eingerichtet werden, so wird die Einrichtung von einer entsprechenden Überprüfungsfunktionen unterbrochen und die Einrichtungsparameter für die Firewall mit denen in den Ausführungsanforderungen verglichen. So kann sichergestellt werden, dass die Einrichtung auf der Kernel-Ebene richtig durchgeführt wird. Versucht z. B. ein Angreifer, einen Programmcode (z. B. eine Container-App bzw. einen Container) mit veränderten Einstellungen zu starten, so wird dieses Verhalten von der Ausführungsumgebung detektiert.
   In der oben beschriebenen Variante wird ein Whitelist-Ansatz für die Ausführungsumgebung bzw. Überprüfung verfolgt.
   In einer anderen Variante kann nach einem Blacklist-Prinzip gearbeitet werden. Beispielsweise kann mit einer entsprechenden Überprüfungsfunktion überprüft werden, ob einer von mehreren in der Ausführungsanforderungen aufgelisteten unzulässigen Zuständen eingerichtet werden soll.
   Zudem kann die Ausführungsumgebung auch mit bestehenden Sicherheitsmechanismen verbunden werden. In Linux-basierten Systemen kann z. B. verifiziert werden, ob eine Container-App in einer bestimmten SELinux Security-Domain ausgeführt, oder gewisse Privilegien (Linux capabilities) besitzt. Die Ausführungsanforderungen können dabei sowohl lokale (für einzelne Container-Apps), als auch globale Einstellungen (für alle Container-Apps) beinhalten. So kann z.B. sichergestellt werden, dass eine gestartete Container-App niemals gewisse Privilegien besitzen wird (z. B. die CAP_SYS_ADMIN capability).
2. Konfiguration der Reaktion:
   In den Ausführungsanforderungen kann die Reaktion auf eine fehlgeschlagene Verifikation festgelegt werden, z. B. wenn das Prüfergebnis ergibt, dass ein Programmcode nicht ausgeführt werden darf. Im einfachsten Fall wird die Einrichtung des Containers unterbunden, möglicherweise im Zusammenhang mit der Bereitstellung eines Fehlersignals oder einem Log-Eintrag.

Eine weitere Möglichkeit umfasst die Fortführung des Startprozesses, allerdings unter veränderten, sicheren Bedingungen. Mit anderen Worten wird der entsprechende Programmcode in einer sicheren Umgebung ausgeführt (z. B. eine abgesicherte virtuelle Maschine, die alle Programmbefehle (z. B. Operationen) virtuell durchführt und keine tatsächliche Ausführung der auf dem Gerät stattfindet).

Die Ausführungsumgebung greift somit aktiv in die Einrichtung der Container-App ein. Stellt eine entsprechende Überprüfungsfunktion beispielsweise fest, dass die Container-App nicht in einer vorgegebenen SELinux Security-Domain ausgeführt werden soll, so kann die Container-App in einer Art "Fallback"- oder "Default"-Domain ausgeführt und ein entsprechendes Warnsignal gesetzt werden. So kann beispielsweise ein möglicherweise bösartiges Verhalten der Container-App in einer sichereren Umgebung (Fallback-Domain) untersucht werden. Eine weitere Möglichkeit ist das Versetzen des gesamten Gerätes in einen Idle- oder Error-Zustand.

In einer weiteren Variante können, je nach Art der Regelverletzung (also Verletzung der Ausführungsanforderungen), auch andere, bereits laufende Container-Apps von einer möglichen Kompromittierung der Ausführungsumgebung betroffen und informiert werden. Wird beispielsweise das (Basis-)Filesystem für die Container von einem Angreifer manipuliert und im Anschluss ein Container gestartet, so kann die Ausführungsumgebung entsprechend reagieren. Die möglichen Reaktionen ähneln hier denen, die bereits erwähnt wurden. Beispielsweise könnten alle betroffenen Container in einen anderen, sicheren Zustand versetzt, oder ihre Ausführung beendet werden. Die Ausführungsanforderungen können mit einem privaten Schlüssel signiert und beim Laden in den Kernel während des Bootvorgangs mit Hilfe eines in den Kernel statisch integrierten öffentlichen Schlüssels verifiziert werden. Schlägt die Verifikation fehl, kann der Bootvorgang z. B. abgebrochen werden. Die Ausführungsanforderungen können durch eine weitere, signierte Ausführungsanforderungen ersetzt oder aktualisiert werden, beispielsweise bei der Installation eines neuen Basis-Filesystems, während sich das Gerät bereits im Feld befindet. Auch ohne die Möglichkeit, das Basis-Filesystem für Container-Apps zu aktualisieren, können Apps nachgeladen werden, solange sie eines der bereits vorhandenen Basis-Filesysteme verwenden.

Die Fig. 2 zeigt ein weiteres Ausführungsbeispiel der Erfindung. Im Einzelnen ist dabei eine Ausführungsumgebung zum Ausführen von Programmcode auf einem Steuergerät gezeigt.

Bei dem gezeigten Ausführungsbeispiel wird eine Kernel-level Ressource, in diesem Falle die Prozess-Datenstruktur 280 einer zu startenden Container-App, verifiziert. Das dargestellte Linux-System verwendet das SELinux Zugriffskontrollsystem, um Container-Apps in eingeschränkten Security-Domains auszuführen. Die SELinux Security-Domain ist in der SELinux-Policy definiert.

Die grundlegende Funktionsweise dieses Ausführungsbeispiel ist analog zu dem in Fig. 1 gezeigten Ausführungsbeispiel.

Die Ausführungsumgebung umfasst entsprechend einen Funktionsspeicher 120, einen Konfigurationsspeicher 110 und eine Ausführungseinheit 140. Zudem kann die Ausführungsumgebung ein Speichermodul 150 umfassen und einen Programmspeicher 130 umfassen. Der Programmspeicher 130 kann derart ausgebildet sein, den Programmcode oder mehrere Programmcodes in Form von Container-Applikationen zu speichern. Der Programmspeicher 130 kann zudem noch ein Programmcode-Management-Modul umfassen. Darüber hinaus kann die Ausführungseinheit 240 beispielsweise als Kernel eines Betriebssystems ausgebildet sein oder ein Teil eines solchen Kernels sein. Entsprechend kann die Ausführungseinheit 240 weitere Kernelressourcen und/oder Steuergeräteressourcen umfassen oder eine Schnittstelle oder ein Management-Modul, das einen Zugriff auf diese erlauben kann. Die gezeigte Ausführungseinheit 240 umfasst beispielsweise eine Sicherheitspolicy 260 (z. B. eine SELinux Policy) und ein Zugriffskontrollsystem 270 (z. B. ein SELinux Modul).

Die Ausführungsumgebung umfasst aus einer zur Bootzeit geladene Ausführungsanforderungen, welche die Security-Domain für Container-Apps vorgibt. Zusätzlich werden die Überprüfungsfunktionen durch LSM Module (LSM: Linux Security Modul) realisiert, welche mittels des LSM-Stacking Mechanismus hinter SELinux geschaltet sind. Versucht das Programmcode-Management-Modul des Programmspeichers 130 nun z. B. eine Container-App zu starten (1), werden zunächst die entsprechenden Überprüfungsfunktionen (z. B. Hooks) des SELinux Moduls und anschließend die Überprüfungsfunktionen des Funktionsspeichers 120 aufgerufen, die durch die Ausführungsanforderungen festgelegt wurden. Das SELinux Modul 270 ermittelt zunächst mit Hilfe der SELinux-Policy 260 die Security-Domain der Container-App (2). Anschließend wird diese in der Kernel-Prozessdatenstruktur 280 festgelegt (3). Wurde die SELinux-Policy beispielsweise durch einen Angreifer manipuliert, so könnte dies dazu führen, dass die Container-App nicht in einer eingeschränkten Security-Domain ausgeführt wird. Im Anschluss an die SELinux-Überprüfungsfunktionen werden allerdings die entsprechenden Überprüfungsfunktionen des Funktionsspeichers 120 aufgerufen. Diese verwenden die zugeordneten Ausführungsanforderungen um die erwartete SELinux Security-Domain der Container-App zu ermitteln (4). Anschließend vergleicht die Ausführungsumgebung oder die Ausführungseinheit diese mit der in der Prozess-Datenstruktur 280 gesetzten Domain (5). Stimmen diese überein, wird der Startvorgang weitergeführt. Entspricht die gesetzte Domain nicht der erwarteten (bzw. durch die Ausführungsanforderungen vorgegebenen Werten), so wird der Startvorgang abgebrochen.

Die in Fig. 1 und Fig. 2 genannten Ausführungsumgebungen oder Geräte können beispielsweise zusätzlich noch eine weitere oder mehrere weitere Komponente/n umfassen, wie beispielsweise einen Prozessor, eine Speichereinheit, weitere Kommunikationsschnittstellen (z. B. Ethernet, WLAN), ein Eingabegerät, insbesondere eine Computertastatur oder eine Computermaus, und ein Anzeigegerät (z. B. einen Monitor), und eine Ein-/Ausgabeeinheit zum Verbinden von Sensoren und/oder Aktoren. Der Prozessor kann beispielsweise mehrere weitere Prozessoren umfassen, die insbesondere zur Realisierung von weiteren Ausführungsbeispielen verwendet werden können. Die genannten Komponenten oder weitere/n Komponente/n können beispielsweise ebenfalls über einen Bus miteinander kommunikativ verbunden sein.

Bei dem Prozessor kann es sich beispielsweise um einen ASIC handeln, der anwendungsspezifisch für die Funktionen eines jeweiligen Moduls (oder einer Einheit) oder aller Module des Ausführungsbeispiels (und/oder weiterer Ausführungsbeispiele) realisiert wurde, wobei die Programmkomponente bzw. die Programmbefehle insbesondere als integrierte Schaltkreise realisiert sind. Bei dem Prozessor kann es sich beispielsweise auch um einen FPGA handeln, der insbesondere mittels der Programmbefehle derart konfiguriert wird, dass der FPGA die Funktionen eines jeweiligen Moduls oder aller Module des Ausführungsbeispiels (und/oder weiterer Ausführungsbeispiele) realisiert.

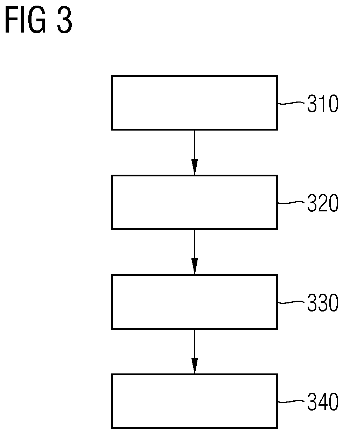

Die Fig. 3 zeigt ein weiteres Ausführungsbeispiel der Erfindung.

Im Einzelnen zeigt die Fig. 3 ein Ablaufdiagramm der Erfindung, wobei die Erfindung als ein rechnergestütztes Verfahren implementiert wird.

Im Einzelnen wird in diesem Ausführungsbeispiel ein Verfahren zum rechnergestützten Ausführen eines Programmcodes auf einem Steuergerät realisiert.

Das Verfahren umfasst einen ersten Verfahrensschritt 310 zum Speichern von Überprüfungsfunktionen.

Das Verfahren umfasst einen zweiten Verfahrensschritt 320 zum Speichern von Ausführungsanforderungen für Überprüfungsbereiche, wobei die Überprüfungsbereiche der Programmcode und/oder zumindest ein erster Teil der Programmbefehle des Programmcodes und/oder eine Ausführungsumgebung und/oder eine Ausführungseinheit sind.

Zudem werden die Überprüfungsbereiche mittels der Ausführungsanforderungen den Überprüfungsfunktionen zugeordnet.

Das Verfahren umfasst einen dritten Verfahrensschritt 330 zum Ermitteln eines Prüfergebnisses mittels der Überprüfungsfunktionen, das angibt ob die Überprüfungsbereiche die Ausführungsanforderungen erfüllen.

Das Verfahren umfasst einen vierten Verfahrensschritt 340 zum Ausführen des jeweiligen Programmbefehls und/oder des Programmcodes abhängig vom Prüfergebnis.
Die Erfindung betrifft somit ein Verfahren und eine Ausführungsumgebung, um beispielsweise auf Feldgeräten eine Ausführung von manipuliertem Programmcode zu unterbinden bzw. eine Ausführung von Programmcode in einer manipulierten Ausführungsumgebung zu unterbinden.

## Patentansprüche

1. Ausführungsumgebung zum Ausführen von Programmcode auf einem Steuergerät aufweisend:
- einen Funktionsspeicher (120), der zum Speichern von Überprüfungsfunktionen eingerichtet ist;
- einen Konfigurationsspeicher (110), der zum Speichern von Ausführungsanforderungen für Überprüfungsbereiche eingerichtet ist,
wobei der Konfigurationsspeicher (110) mittels eines Manipulationserkennungsmoduls geschützt ist, und
wobei die Ausführungsanforderungen in einem Konfigurationsmodus der Ausführungsumgebung konfiguriert werden können;
- eine Ausführungseinheit (140, 240),
- wobei die Überprüfungsbereiche zumindest einer von
- dem Programmcode,
- zumindest einem ersten Teil der Programmbefehle des Programmcodes,
- der Ausführungsumgebung und/oder
- der Ausführungseinheit (140, 240) sind;
- wobei den Überprüfungsbereichen mittels der Ausführungsanforderungen die Überprüfungsfunktionen zugeordnet sind,
- wobei die Ausführungseinheit (140, 240) eingerichtet ist, mittels der Überprüfungsfunktionen ein Prüfergebnis zu ermitteln, das angibt, ob der jeweilige Überprüfungsbereich die Ausführungsanforderungen erfüllt,
- wobei die Ausführungseinheit (140, 240) eingerichtet ist, den jeweiligen Programmbefehl und/oder Programmcode abhängig vom Prüfergebnis auszuführen.

2. Ausführungsumgebung nach Anspruch 1, wobei
- die Ausführungsanforderungen Ressourcen oder vorgegebene Programmbefehle festlegen deren Ausführung oder deren Verwendung unzulässig sind.

3. Ausführungsumgebung nach Anspruch 1 oder 2, wobei
- die Ausführungsanforderungen Ressourcen oder vorgegebene Programmbefehle festlegen deren Ausführung oder deren Verwendung zulässig sind.

4. Ausführungsumgebung nach einem der vorhergehenden Ansprüche, wobei
- die Ausführungsanforderungen für Ressourcen Zustände für die Ausführung des Programmcodes oder der jeweiligen Programmbefehle festlegen.

5. Ausführungsumgebung nach einem der vorhergehenden Ansprüche, wobei die Ausführungsanforderungen eine Prüfsumme für den Programmcode und/oder die Programmbefehle und/oder die Ausführungsumgebung und/oder die Ausführungseinheit (140, 240) vorgeben.

6. Ausführungsumgebung nach einem der vorhergehenden Ansprüche, wobei diese eingerichtet ist, das Prüfergebnis zumindest zum Teil anhand der zugeordneten Überprüfungsfunktionen zu ermitteln.

7. Ausführungsumgebung nach einem der vorhergehenden Ansprüche, wobei
- die Überprüfungsfunktionen die Ausführungsumgebung anhand der Ausführungsanforderungen überprüfen,
- die Ausführungsumgebung eingerichtet ist, das Prüfergebnis zumindest zum Teil anhand des Überprüfens ihrer selbst zu ermitteln.

8. Ausführungsumgebung nach einem der vorhergehenden Ansprüche, wobei
- die Ausführungsumgebung eingerichtet ist, eine Steuerfunktion auszuführen, wenn eine Prüfung der Ausführungsanforderungen für den Programmcode oder einen der jeweiligen Programmbefehle fehlschlägt,
- beispielsweise die Ausführungsanforderungen die jeweilige Steuerfunktion festlegen,
- beispielsweise Steuerfunktionen im Funktionsspeicher (120) gespeichert sind.

9. Verfahren zum rechnergestützten Ausführen eines Programmcodes auf einem Steuergerät mit folgenden Verfahrensschritten:
- Speichern (310) von Überprüfungsfunktionen;
- Speichern (320) von in einem Konfigurationsmodus der Ausführungsumgebung konfigurierbaren Ausführungsanforderungen für Überprüfungsbereiche in einem mittels eines Manipulationserkennungsmoduls geschützten Konfigurationsspeicher (110),
- wobei die Überprüfungsbereiche zumindest einer von
- dem Programmcode
- zumindest einem ersten Teil der Programmbefehle des Programmcodes,
- einer Ausführungsumgebung und/oder
- einer Ausführungseinheit (140, 240) sind;
- wobei den Überprüfungsbereichen mittels der Ausführungsanforderungen die Überprüfungsfunktionen zugeordnet werden;
- Ermitteln (330) eines Prüfergebnisses mittels der Überprüfungsfunktionen, das angibt ob die Überprüfungsbereiche die Ausführungsanforderungen erfüllen;
- Ausführen (340) des jeweiligen Programmbefehls und/oder des Programmcodes abhängig vom Prüfergebnis.

10. Computerprogrammprodukt mit Programmbefehlen zur Durchführung des Verfahrens nach Anspruch 9.

11. Computerprogrammprodukt mit Programmbefehlen für ein Erstellungsgerät, das mittels der Programmbefehle konfiguriert wird, um die Ausführungsumgebung nach einem der Ansprüche 1-8 zu erstellen.

12. Bereitstellungsvorrichtung für das Computerprogrammprodukt nach Anspruch 10 oder 11, wobei die Bereitstellungsvorrichtung das Computerprogrammprodukt bereitstellt und speichert.

## Claims

1. Execution environment for executing program code on a controller, having:
- a function memory (120) that is designed to store check functions;
- a configuration memory (110) that is designed to store execution requirements for check regions,
wherein the configuration memory (110) is protected by way of a manipulation detection module, and
wherein the execution requirements are able to be configured in a configuration mode of the execution environment;
- an execution unit (140, 240),
- wherein the check regions are at least one of
- the program code,
- at least a first portion of the program commands of the program code,
- the execution environment and/or
- the execution unit (140, 240);
- wherein the check functions are assigned to the check regions by way of the execution requirements,
- wherein the execution unit (140, 240) is designed to use the check functions to determine a test result that indicates whether the respective check region meets the execution requirements,
- wherein the execution unit (140, 240) is designed to execute the respective program command and/or program code depending on the test result.

2. Execution environment according to Claim 1, wherein
- the execution requirements define resources or predefined program commands the execution or use of which is impermissible.

3. Execution environment according to Claim 1 or 2, wherein
- the execution requirements define resources or predefined program commands the execution or use of which is permissible.

4. Execution environment according to one of the preceding claims, wherein
- the execution requirements for resources define states for the execution of the program code or of the respective program commands.

5. Execution environment according to one of the preceding claims, wherein the execution requirements predefine a checksum for the program code and/or the program commands and/or the execution environment and/or the execution unit (140, 240).

6. Execution environment according to one of the preceding claims, wherein it is designed to determine the test result at least partly on the basis of the assigned check functions.

7. Execution environment according to one of the preceding claims, wherein
- the check functions check the execution environment on the basis of the execution requirements,
- the execution environment is designed to determine the test result at least partly on the basis of the check on itself.

8. Execution environment according to one of the preceding claims, wherein
- the execution environment is designed to execute a control function when a test of the execution requirements for the program code or one of the respective program commands fails,
- the execution requirements for example define the respective control function,
- control functions are stored for example in the function memory (120).

9. Method for the computer-aided execution of a program code on a controller, having the following method steps:
- storing (310) check functions;
- storing (320) execution requirements, able to be configured in a configuration mode of the execution environment, for check regions in a configuration memory (110) protected by way of a manipulation detection module,
- wherein the check regions are at least one of
- the program code,
- at least a first portion of the program commands of the program code,
- an execution environment and/or
- an execution unit (140, 240);
- wherein the check functions are assigned to the check regions by way of the execution requirements;
- using the check functions to determine (330) a test result that indicates whether the check regions meet the execution requirements;
- executing (340) the respective program command and/or the program code depending on the test result.

10. Computer program product containing program commands for performing the method according to Claim 9.

11. Computer program product containing program commands for a creation device that is configured, by way of the program commands, to create the execution environment according to one of Claims 1-8.

12. Provision device for the computer program product according to Claim 10 or 11, wherein the provision device provides and stores the computer program product.

## Revendications

1. Environnement d'exécution permettant d'exécuter un code de programme sur un dispositif de commande, comportant : une mémoire de fonction (120) qui est configurée pour sauvegarder des fonctions de vérification ;
une mémoire de configuration (110) qui est configurée pour sauvegarder des requêtes d'exécution pour des zones de vérification,
la mémoire de configuration (110) étant protégée au moyen d'un module de reconnaissance de manipulation et
les requêtes d'exécution pouvant être configurées dans un mode de configuration de l'environnement d'exécution ;
une unité d'exécution (140, 240),
les zones de vérification étant au moins
le code de programme,
au moins une première partie des commandes de programme du code de programme,
l'environnement d'exécution et/ou
l'unité d'exécution (140, 240) ;
les fonctions de vérification étant associées aux zones de vérification au moyen des requêtes d'exécution,
l'unité d'exécution (140, 240) étant configurée pour déterminer, au moyen des fonctions de vérification, un résultat de contrôle qui indique si la zone de vérification respective satisfait les requêtes d'exécution,
l'unité d'exécution (140, 240) étant configurée pour exécuter la commande de programme respective et/ou le code de programme respectif en fonction du résultat de contrôle.

2. Environnement d'exécution selon la revendication 1, les requêtes d'exécution déterminant des ressources ou des commandes de programme données dont l'exécution ou l'autorisation ne sont pas autorisées.

3. Environnement d'exécution selon la revendication 1 ou 2, les requêtes d'exécution déterminant des ressources ou des commandes de programme données dont l'exécution ou l'autorisation sont autorisées.

4. Environnement d'exécution selon l'une des revendications précédentes, les requêtes d'exécution déterminant, pour des ressources, des états pour l'exécution du code de programme ou des commandes de programme respectives.

5. Environnement d'exécution selon l'une des revendications précédentes, les requêtes d'exécution spécifiant une somme de contrôle pour le code de programme et/ou les commandes de programme et/ou l'environnement d'exécution et/ou l'unité d'exécution (140, 240).

6. Environnement d'exécution selon l'une des revendications précédentes, celui-ci étant configuré pour déterminer le résultat de contrôle au moins en partie à l'aide des fonctions de vérification associées.

7. Environnement d'exécution selon l'une des revendications précédentes,
les fonctions de vérification vérifiant l'environnement d'exécution à l'aide des requêtes d'exécution,
l'environnement d'exécution étant configuré pour déterminer le résultat de contrôle au moins en partie à l'aide de son auto-vérification.

8. Environnement d'exécution selon l'une des revendications précédentes,
l'environnement d'exécution étant configuré pour exécuter une fonction de commande si un contrôle des requêtes d'exécution pour le code de programme ou une des commandes de programme respectives échoue,
par exemple les requêtes d'exécution déterminant la fonction de commande respective,
par exemple des fonctions de commande étant sauvegardées dans la mémoire de fonction (120).

9. Procédé pour l'exécution assistée par ordinateur d'un code de programme sur un appareil de commande, comportant les étapes de procédé suivantes :
sauvegarde (310) de fonctions de vérification ;
sauvegarde (320) de requêtes d'exécution configurables dans un mode de configuration de l'environnement d'exécution pour des zones de vérification dans une mémoire de configuration (110) protégée au moyen d'un module de reconnaissance de manipulation,
les zones de vérification étant au moins
le code de programme,
au moins une première partie des commandes de programme du code de programme,
l'environnement d'exécution et/ou
l'unité d'exécution (140, 240) ;
les fonctions de vérification étant associées aux zones de vérification au moyen des requêtes d'exécution,
détermination (330), au moyen des fonctions de vérification, d'un résultat de contrôle qui indique si les zones de vérification satisfont les requêtes d'exécution,
exécution (340) de la commande de programme respective et/ou du code de programme respectif en fonction du résultat de contrôle.

10. Produit de programme informatique avec des commandes de programme pour exécuter le procédé selon la revendication 9.

11. Produit de programme informatique avec des commandes de programme pour un appareil de création qui est configuré au moyen des commandes de programme pour créer l'environnement d'exécution selon l'une des revendications 1-8.

12. Dispositif de mise à disposition du produit de programme informatique selon la revendication 10 ou 11, le dispositif de mise à disposition fournissant et sauvegardant le produit de programme informatique.
